(19) Europäisches Patentamt
European Patent Office
Office européen des brevets

(11) **EP 4 501 126 A1**

## (12) EUROPEAN PATENT APPLICATION

(43) Date of publication:
**05.02.2025 Bulletin 2025/06**

(21) Application number: 23189847.9

(22) Date of filing: **04.08.2023**

(51) International Patent Classification (IPC):
*A23J 1/00* (2006.01)   *A23J 1/16* (2006.01)
*A23J 3/14* (2006.01)   *A23L 2/52* (2006.01)
*A23L 2/66* (2006.01)   *A23L 19/15* (2016.01)
*A23L 33/17* (2016.01)   *A23L 33/185* (2016.01)
*A23L 35/00* (2016.01)   *C12G 1/00* (2019.01)
*C12G 3/00* (2019.01)

(52) Cooperative Patent Classification (CPC):
**A23J 1/006; A23J 1/16; A23J 3/14; A23L 2/52;
A23L 2/66; A23L 19/15; A23L 33/17; A23L 33/185;
A23L 35/10; C12G 1/00; C12G 3/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Coöperatie Koninklijke Avebe U.A.
9641 GK Veendam (NL)**

(72) Inventors:
• **SPELBRINK, Robin Eric Jacobus
9641 GK Veendam (NL)**
• **DE VOS, Agatha Maria
9641 GK Veendam (NL)**
• **TIMMERMANS, Roy Stefanus Catharina
9641 GK Veendam (NL)**

(74) Representative: **V.O.
P.O. Box 87930
2508 DH Den Haag (NL)**

## (54) MICROPARTICULATED PATATIN

(57)     The invention relates to a method for the preparation of a microparticulated patatin, and the microparticulated patatin that can be obtained by this method. The invention further relates to methods for preparing a gel, emulsion, foam or clarified alcoholic fermented product from the microparticulated patatin and the products obtained by these methods, and to food products comprising microparticulated patatin.

EP 4 501 126 A1

**Description**

FIELD OF THE INVENTION

The invention relates to a method for the preparation of microparticulated patatin, and microparticulated patatin that can be obtained by this method. The invention further relates to a method for preparing food products using microparticulated patatin, such as gelled food products, foamed food products and clarified fermented alcoholic liquids and the products obtained by these methods, and to food products prepared using microparticulated patatin.

BACKGROUND TO THE INVENTION

There is a strong trend towards the use of plant proteins to replace animal proteins as a vegan, more sustainable, animal friendly and healthier alternative. Patatin is a plant protein with advantageous functional properties regarding for instance emulsification, foaming and gelation and can be used to replace animal proteins such as gelatin and milk proteins.

Patatin is a potato protein which is naturally present as a storage protein in potato tubers. When isolated from potatoes, it is a vegetal protein product that can be used in food products as a functional ingredient for instance to achieve emulsification and gelation. Patatin is also known to exhibit enzymatic activity: it can act as a lipase cleaving fatty acids from lipids. Mostly this enzymatic activity is undesired in food products since it can lead to off-taste.

Microparticulation is known as a controlled, thermally induced aggregation process. During microparticulation, heat and shear are applied simultaneously or sequentially in order to control the size of the aggregates formed. The combined thermal and mechanical treatment applied during microparticulation can lead to controlled aggregate size and properties. Microparticulation is for instance applied to whey proteins wherein the microparticulation procedure imparts specific structural and physical properties to the protein. Microparticulated whey protein can for instance be applied as a fat replacer or functional ingredient such as to modify the viscosity or increase the heat stability of food products.

It is an object of the present invention to provide vegan protein ingredients with excellent nutritional and functional properties for food, in order to be able to produce a wide range of plant-based food products. These food products can for instance be in the form of emulsions, gels and foams. It is another object of the present invention to provide vegan protein ingredients which are shelf stable, easily processable and transportable such as in the form of free flowable powders.

SUMMARY OF THE INVENTION

In one aspect, the invention relates to a method for the preparation of microparticulated patatin comprising:
A method for the preparation of microparticulated patatin comprising:

    a) Providing an aqueous suspension comprising at least 1 wt.% of protein concentrate, said protein concentrate comprising at least 80 wt.% of protein, said protein comprising at least 60 wt.% of patatin;
    b) Adjusting the pH of the aqueous suspension to a value of between 7.5 and 11, thereby obtaining a pH-adjusted protein suspension;
    c) Heating the pH-adjusted protein suspension to a temperature of at least 75 °C;
    d) Holding the pH-adjusted protein suspension at a temperature of at least 75 °C while applying shear at a shear rate of at least $2.0 \text{ s}^{-1}$, thereby obtaining a heated protein suspension;
    e) Cooling the heated protein suspension to a temperature below 60 °C while applying shear at a shear rate of at least $2.0 \text{ s}^{-1}$, thereby obtaining said microparticulated patatin.

The invention further relates to microparticulated patatin obtainable by the preceding method of the invention.

The invention also relates to microparticulated patatin comprising between 30 and 100 wt.% of protein relative to dry mass, the protein comprising at least 60 wt.% patatin, which microparticulated patatin is characterized by a z-average diameter of between 10 and 1500 nm when suspended in water at room temperature, and which microparticulated patatin is further characterized in that the patatin has lipase activity of lower than 30 U/g product.

In a further aspect, the invention relates to a method for preparing a food product comprising:

    a) providing microparticulated patatin according to any of claims 9-13;
    b) providing further ingredients;
    c) preparing a food product by combining the microparticulated patatin from a) and one or more further ingredients from b).

In yet a further aspect, the invention relates to a food product obtainable by a method according to the invention.

In yet a further aspect, the invention relates to a food product comprising or prepared from microparticulated patatin according to the invention.

DETAILED DESCRIPTION

The invention is based on the judicious insight that when patatin is subjected to mechanical heat treatment under specific conditions, microparticulated patatin can be obtained with advantageous properties as compared to for instance native patatin.

Definitions

As used herein, the word 'comprising' does not exclude the presence of other features or steps than those listed. Furthermore, the words 'a' and 'an' shall not be construed as limited to 'only one', but instead are used to mean 'at least one', and do not exclude a plurality. The mere fact that certain measures are recited in mutually different claims or embodiments does not indicate that a combination of these measures cannot be used to an advantage.

In the below, where "prepared from" is written with reference to a food product comprising the microparticulated patatin of the invention, "comprising" is equally encompassed. It is considered that a food product which is "prepared from" a microparticulated patatin (which is partially but not fully denatured), may comprise protein derived from said microparticulated patatin in which the patatin is to some degree native, if the food product has not been subjected to processing steps which lead to full denaturation. A food product which is "prepared from" microparticulated patatin may also be a food product in which the patatin is no longer native, due to processing steps of the food product which lead to denaturation. Therefore, a food product which is "prepared from" microparticulated patatin encompasses both food products "comprising" microparticulated patatin (which may later be processed, e.g. a non-pasteurized vegan cream liqueur of the invention), as well as food products which have been prepared using microparticulated patatin, but which have been processed in such a way that the patatin is no longer native.

Room temperature is defined as the temperature prevailing in a laboratory work area, generally a temperature 20 °C (tolerance of $\pm$ 5 °C).

The invention pertains to a method for the preparation of microparticulated patatin comprising:

a) Providing an aqueous suspension comprising at least 1 wt.% of protein concentrate, said protein concentrate comprising at least 80 wt.% of protein, said protein comprising at least 60 wt.% of patatin;
b) Adjusting the pH of the aqueous suspension to a value of between 7.5 and 11, thereby obtaining a pH-adjusted protein suspension;
c) Heating the pH-adjusted protein suspension to a temperature of at least 75 °C;
d) Holding the pH-adjusted protein suspension at a temperature of at least 75 °C while applying shear at a shear rate of at least 2.0 s$^{-1}$, thereby obtaining a heated protein suspension;
e) Cooling the heated protein suspension to a temperature below 60 °C while applying shear at a shear rate of at least 2.0 s$^{-1}$, thereby obtaining said microparticulated patatin.

The method comprises a pH-adjustment step, a heating step, a holding step, and a cooling step, executed on an aqueous suspension comprising at least 60 wt.% of patatin, relative to all protein. Applying shear during both the holding step and the cooling step provides microparticulated patatin, which has interesting properties for use in food processing. In preferred embodiments, shear can also be applied during the heating step.

Microparticulated patatin retains the emulsification, foaming and gelation properties of a regular, native patatin isolate, but is devoid of lipase activity. Thus, microparticulated patatin can be used as a gelling agent, an emulsifying agent or a foaming agent without generating off-taste through hydrolytic activity, and it can be used in alcoholic fermented liquids without affecting taste by hydrolytic activity on flavor esters or by esterification of alcoholic compounds.

In addition, the particle size (expressed as the z-average diameter) of microparticulated patatin is 100 - 1500 nm. It is presumed the small particle size allows for retaining the functional characteristics of patatin even in the presence of some denaturation, leading to the observed advantages of microparticulated patatin over other patatin products. Furthermore, the small particle size allows for a high solubility in water.

The protein suspension

The aqueous suspension in step a) of the method comprises at least 1 wt.% of protein concentrate, said protein concentrate comprising at least 80 wt.% of protein, said protein comprising at least 60 wt.% of patatin.

The suspension may comprise protein derived from a different source than potato. In preferred embodiments however, the protein concentrate is a potato protein concentrate. In further preferred embodiments, the suspension comprises no other protein than potato protein. In all embodiments, the suspension comprises at least 60 wt.% of patatin, relative to all protein.

The microparticulated patatin according to the invention is obtained from a protein concentrate. A concentrate in this context encompasses materials which may also be characterized as an isolate. A combination of different protein materials can be used as the concentrate, subject to the condition that the concentrate comprises at least 60 wt.% of patatin, relative to all protein.

A potato protein concentrate can be obtained from the tubers of the potato plant (*Solanum tuberosum* L.). Dependent on aspects such as the potato breed, cultivation conditions, potatoes contain between about 1.2 wt.% and 2.5 wt.% protein. Potato protein can be divided into three classes (i) patatin, (ii) protease inhibitors, and (iii) other proteins, mostly high molecular weight proteins.

Patatin is a protein which is naturally present in the potato tuber as storage protein. Storage protein is protein which functions as a store for nitrogen, sulphur and/or carbon, enabling the plant to survive periods of adverse growth conditions or between growing seasons. Storage protein is generally present in a quantity of from 40 wt.% to 50 wt.% of all protein in the potato tuber. Storage protein (i.e. patatin) can generally be characterized by a molecular weight of from 35 kDa to 50 kDa, preferably from 38 kDa to 45 kDa and/or by an isoelectric point in a range of from 4.8 to 5.6. The molecular weight can be determined by commonly known methods, such as SDS page. The isoelectric point can also be determined by commonly known methods, such as for example isoelectric focusing.

Potato protease inhibitors can be divided into different groups based on their molecular weight. Protease inhibitors comprise carboxypeptidase inhibitor (molecular weight about 4100 Da) and protease inhibitors IIa and IIb (molecular weight of about 20.7 kDa), and protease inhibitor A5 (molecular weight 26 kDa). The ratio between different groups of protease inhibitors in the potato protein depends among others on the potato variety.

A protein concentrate for use in obtaining microparticulated patatin of the invention comprises at least at least 80 wt.% of protein, relative to dry matter, said protein comprising at least 60 wt.% of patatin, relative to all protein. This protein concentrate may be referred to as a patatin concentrate, or a patatin isolate, or generally, as a protein material comprising at least 60 wt.% of patatin, relative to all protein.

Patatin can be isolated from potato tubers, or from other potato-derived processing streams such as potato juice (for example the juice obtained as a side product in potato starch manufacturing), or potato cutting water (the processing water which is obtained when potatoes are being shaped for consumption as for example fries or chips). One particularly convenient method to isolate patatin has been described in WO 2008/069650, although the skilled person can obtain isolated patatin by other methods. In addition, patatin is commercially available as Solanic® 200, from Coöperatie Koninklijke Avebe UA (Veendam).

The protein content of a protein concentrate, or of a food product comprising protein, can be determined by standard methods in the art, such as by Kjeldahl analysis using a correction factor of 5.2.

If the microparticulated patatin of the invention comprises protein other than patatin, the amount of patatin can be determined by ELISA using antibodies that are specific for patatin, and/or that are specific for the other protein(s), such as for example potato protease inhibitors. Furthermore, presence of patatin can be distinguished from other protein, such as potato protease inhibitors or protein from other sources, by the presence of specific electrophoresis bands measured with techniques such as SDS-PAGE and capillary electrophoresis that correspond with the typical molecular weights of these proteins.

Protein, in the present context, is preferably native protein. The protein comprises at least 60 wt.% of patatin, in which the patatin is preferably native. In much preferred embodiments, the protein concentrate is a native protein concentrate, preferably a native potato protein concentrate, comprising at least 60 wt.% patatin relative to all protein, preferably native patatin.

Native in the present context means that the isolation of the protein from tuber is achieved without significantly affecting the protein. Thus, native protein is not significantly degraded and is not significantly denatured. That is, the amino acid order, the three-dimensional structure and the functional properties such as solubility, emulsifying properties, gelling properties, foaming properties and enzymatic activity are essentially intact, in comparison to the protein as it occurs in tuber. The amount of protein in the native state can suitably be determined by measurement of the typical enzymatic or inhibitory activities of the protein. In the present context, patatin is considered native when the lipid acyl hydrolase activity is comparable to the lipid acyl hydrolase activity of Solanic 200.

The aqueous suspension in the method according to the invention comprises at least 1 wt.% of protein concentrate. In a preferred embodiment, the aqueous suspension comprises between 2.0 and 20 wt.% of protein concentrate, more preferably between 3.0 and 15 wt.% of protein concentrate, even more preferably between 3.5 and 12.5 wt.% of protein concentrate. The protein concentrate comprises at least 80 wt.% of protein, preferably at least 85 wt.%, relative to dry matter.

The protein comprises at least 60 wt.% of patatin, relative to all protein. In a preferred embodiment, the protein comprises between 70 and 99 wt.% of patatin, more preferably between 75 and 95 wt.% of patatin, relative to all protein. Said patatin is preferably native.

The pH-adjustment step

In the pH adjustment step, the pH of the aqueous suspension is adjusted to a value of between 7.5 and 11, thereby obtaining a pH-adjusted protein suspension. Preferably the pH is adjusted to a value of between 8.0 and 10.5, more preferably to a value between 8.5 and 9.5.

Preferably, the pH of the aqueous suspension is checked and adjusted by providing the mixture with acids and/or bases to achieve the desired pH. Suitable acids are acceptable for use in food, and may include strong acids such as hydrogen chloride or sulphuric acid, or weak acids such as acetic acid, lactic acid or citric acid. Suitable bases include at least metal hydroxides, although other food-acceptable bases are not to be excluded.

A preferred acid for pH adjustment is hydrogen chloride, which may be preferably provided to the aqueous suspension as a solution. In preferred embodiments, a solution for lowering the pH comprises hydrogen chloride (or another acid) at a concentration of from 1 N to 10 N, preferably 2 - 8 N, more preferably 3 - 7 N, even more preferably about 5 N (defined as 5 ± 1N).

Preferred bases for pH adjustment are sodium hydroxide or potassium hydroxide, preferably sodium hydroxide. Preferably, a solution for increasing the pH contains hydroxide at a concentration of from 1 N to 10 N, preferably 2 - 8 N, more preferably 3 - 7 N, even more preferably about 5 N (defined as 5 ± 1N).

The heating step

In the heating step, the pH-adjusted protein suspension is heated to a temperature of at least 75 °C. In preferred embodiments, the pH-adjusted protein suspension is heated to a temperature of between 76 to 98 °C, more preferably of between 78 and 95 °C. Preferably, the heating step is achieved in a time of maximally 20 min, more preferably in a time between 1 s and 15 min, even more preferably in a time between 5 s and 10 min.

Heating can be achieved by any means appropriate for the heating of a protein suspension. In preferred embodiments, heating of the pH-adjusted protein suspension is performed in equipment which is capable of applying shear. In further preferred embodiments, heating can be achieved by the use of a heat exchanger.

In optional embodiments, shear is applied during the heating step, although this is not required for obtaining the microparticulated patatin of the invention. When shear is applied during the heating step, the shear is preferably as defined below for the holding step.

The holding step

The heated protein suspension is subsequently held at a temperature of at least 75 °C while applying shear at a shear rate of at least 2.0 s$^{-1}$, resulting in a sheared protein suspension. In preferred embodiments, the pH-adjusted protein suspension is held at a temperature of between 76 to 98 °C, more preferably of between 78 and 95 °C. In much preferred embodiments, the holding step maintains the temperature at the temperature attained during the heating step, for a time defined as the holding time.

Preferably, the holding time is at least 10 s, more preferably between 20 s and 20 min, even more preferably between 40 s and 15 min. When heating to and holding to a relatively low temperature, such as 80 °C, the holding time is generally longer than when heating to and holding at a higher temperature, such as 95 °C.

Shear is defined as the physical stress which may be exerted on a the protein suspension. The quantity of shear is expressed in s$^{-1}$. Shear can be applied onto a liquid by accomplishing velocity differences at different points in the liquid, leading to a progressive shear deformation. When for instance a liquid is present between two plates moving with different but constant speed parallel to each other, shear is applied onto that liquid at a shear rate which is defined as the velocity difference between the two plates divided by the distance between the plates.

Without wishing to be bound by theory, it is hypothesized that shear affects the aggregation process since aggregates may breakup under the influence of shear. At a certain shear rate, a balance may be reached between aggregation of protein molecules on the one hand and breakup of aggregates on the other hand. The inventors found that the particle size of the microparticles in the microparticulated patatin according to the invention is an important parameter for its functional properties and that shear is a relevant parameter to control the particle size.

In the context of the present invention, shear is applied during the holding step at a shear rate of at least 2.0 s$^{-1}$. In preferred embodiments, the shear rate is between 5 and 1000 s$^{-1}$, preferably a shear rate between 8 and 500 s$^{-1}$. Alternative preferred shear rates include values of at least 100 s$^{-1}$, such as 100 - 1500 s$^{-1}$, preferably 150 - 1100 s$^{-1}$.

Shear can be applied by any means known in the art. At an industrial scale, different options are available to realize shearing at elevated temperatures. One of those options is to make use of a scraped surface heat exchanger. Heating (or cooling) and shear treatment can be combined in a scraped surface heat exchanger. Alternatively the shear treatment may be performed in a high pressure homogenizer. This provides shear by forcing the suspension through small holes under high pressure. A high pressure homogenizer may be combined with a heat exchanger in order to keep the temperature at a value of at least 75 °C or to cool to a temperature below 60 °C.

Other ways to apply shear onto the protein suspension may be by treatment with bead mills, ultrasonic treatment (also sonication), rotor-stator mechanical treatment (such as a shear pump) or high pressure treatment. Such devices may preferably be combined with a heat exchanger in order to keep the temperature at a value of at least 75°C or to cool to a temperature below 60°C.

Heat exchangers such as tubular heat exchangers and plate heat exchangers are well known to persons skilled in the art, and are well suited to apply shear in the present context.

Another way to apply shear is the use of extrusion. In extrusion, shear is applied by the screws, and the heating of the extruder barrel can induce simultaneous mechanical and thermal stresses on the protein. Therefore, an extruder is also suited to apply shear while in the same time the temperature can be kept at a value of at least 75 °C. The temperature can be decreased by not heating or cooling the extruder barrel. For applying shear by extrusion, the moisture content is preferably above 40 wt.%, preferably above 50 wt.%, more preferably above 60 wt.%, even more preferably above 70 wt.%, such as 50 - 99 wt.%, preferably 60 - 98 wt.%, more preferably 70 - 97 wt.%.

In a preferred embodiment of the invention, shear is applied by using one or more devices selected from the group of scraped surface heat exchanger, high pressure homogenizer and shear pump.

In the method of the invention, it is essential that shear is applied during the holding step. Without wishing to be bound by theory, it is hypothesized that the combination of heat and shear as applied during the holding step provides for partial denaturation of the patatin, while also leading to exposure of hydrophobic groups of the patatin molecule, and thereby subsequently to aggregation into particles.

The cooling step

In the cooling step, the sheared protein suspension is cooled to a temperature below 60 °C while applying shear at a shear rate of at least 2.0 s$^{-1}$, thereby obtaining microparticulated patatin. Preferably, cooling is continued to room temperature, as defined elsewhere. Further preferably, the shear rate during the cooling step is as defined for the holding step. Shear may be applied as defined at the holding step.

It is essential that shear is applied during the cooling step. Without wishing to be bound by theory, it is believed that the cooling to a temperature of below 60 °C partially annuls the partial denaturation of the protein and the exposure of hydrophobic sites, for as far as the denaturation can be reversed. Therewith, the protein molecules lose their tendency to aggregate upon cooling to a temperature of below 60 °C, while maintaining a well-defined particle size. It has been found by the inventors that the lipase activity of patatin can be permanently reduced or inactivated by the method according to the invention, while the functional properties of gelling capacity, emulsifying capacity and foaming capacity may be restored, in as far as they may have been lost during the heating step.

Cooling may be active or passive cooling. Passive cooling commences at the moment the suspension is no longer maintained at the holding temperature, thereby releasing thermal energy to the environment. Active cooling may be commenced by extracting thermal energy from the sheared suspension, such as by refrigeration, ice addition, and the like.

Preferably, the cooling to a temperature of below 60 °C is achieved in a time of at most 20 min, more preferably in a time between 1 s and 15 min, even more preferably in a time between 5 s and 10 min.

In a preferred embodiment the shear rate during cooling to a temperature below 60 °C is between 5 and 1000 s$^{-1}$, more preferably between 8 and 500 s$^{-1}$, most preferably between 10 and 400 s$^{-1}$. In a further preferred embodiment, the cooling is performed to a temperature of below 58°C, more preferably to a temperature of below 56°C, even more preferably to a temperature of below 54°C.

The method of the invention thus overall provides specific conditions for the treatment of a protein suspension comprising at least 60 wt.%, relative to all protein, of patatin, among which shear, pH, concentration and temperature, which leads to a controlled aggregation process and partial denaturation, as can be seen by the loss of lipase activity, and the maintenance of the functional properties. This process provides microparticles that are formed with specific characteristics such as relatively small particle size and high solubility in water, wherein lipase activity of the patatin is lost, but the other functional features of patatin, including gelling, emulsification and foaming capacity, are retained.

Preferred embodiments

In a preferred embodiment of the invention, the method for the preparation of microparticulated patatin comprises drying the microparticulated patatin, thereby providing microparticulated patatin in the form of a powder. A powder in this context is a free-flowing particulate material, having a moisture content of 0.5 - 125 wt.%, preferably 1 - 12 wt.%.

Drying of the microparticulated patatin is an optional extra process step which enables the extension of the shelf life of the product, easier handling and lowering of transport costs.

Whereas various techniques are known for drying liquid products, such as freeze drying, tray drying, rotary or drum drying, fluidized bed drying, vacuum drying, on an industrial scale spray drying is often applied. During spray drying, the liquid product is sprayed into a drying chamber by means of for instance atomization by a nozzle or with a rotating wheel. Hot air is led through the drying chamber in order to dry the droplets into powder. The powder is collected at the bottom of the spray drier and optionally fed through a fluidized bed drier for extra drying.

In a preferred embodiment, drying of the microparticulated patatin is performed by means of one or more techniques selected from the group of fluidized bed drying and spray drying. More preferably, spray drying is applied as a drying step.

Microparticulated patatin of the invention

The method of the invention provides microparticulated patatin, and the invention thus also pertains to microparticulated patatin obtainable by the method of the invention. Microparticulated patatin according to the invention has the advantage of having high solubility due to the small particle size, and intact functional characteristics such a gelling capacity, emulsifying capacity and foaming capacity, whereas lipase activity is less than 30 U/g product, preferably less than 20 u/g product, more preferably less than 10 U/g product, most preferably around 0 U/g product. Low lipase activity allows for application in food products without affecting taste, so that no off-taste is generated.

The solubility can be assessed by a solubility test. An appropriate test is described by Koningsveld (Koningsveld G.A., Physicochemical and functional properties of potato proteins, PhD thesis Wageningen University, 2001, pp. 65-66). A suspension of 1 wt.% protein in water is brought at a pH of 7. The suspension is centrifugated for 15 min at 3600 g and at a temperature of 20°C. The concentration of protein in both the suspension prior to centrifugation and the supernatant after centrifugation is measured by means of the micro-Kjeldahl method (AOAC, 1980). The solubility is expressed as the relative value of the protein concentration in the supernatant versus the suspension prior to centrifugation. If the solubility is higher than 50%, preferably higher than 70%, the solubility is considered high.

Lipase activity can be assessed using a pH-stat method derived from the Food Chemicals Codex (Food Chemicals Codex, Volume 1, Codex, Institute of Medicine (USA) Committee on Food Chemicals, National Academies Press, 1996, pp. 803-807), as described in detail in the examples. It has been found that the lipase activity of microparticulated patatin according to the invention is significantly reduced whereas relevant functional properties of native patatin have remained intact. The lipase activity, determined using the pH-stat method outlined in the examples, of microparticulated patatin according to the invention is generally lower than 30 U/g product, preferably less than 20 u/g product, more preferably less than 10 U/g product, most preferably around 0 U/g product..

Particle size can be assessed in suspension in water at room temperature using dynamic light scattering measurements, performed at a fixed angle of 173° and a wavelength of 632.8 nm using a refractive index of 1.45. Dynamic light scattering measurements can for instance be performed with a Zetasizer Nano ZS (Malvern Panalytical). The mean particle size measured with dynamic light scattering can be expressed as the z-average diameter which is the intensity weighted mean hydrodynamic size of the ensemble collection of particles measured by dynamic light scattering (DLS). The z-average diameter of microparticulated patatin according to the invention is between 10 and 1500 nm, preferably between 15 and 1250 nm, preferably between 20 and 1000 nm.

The gelation properties can be assessed using a gelation test protocol, which has been described in detail in the examples.

The foaming properties can be assessed by determination of the foam overrun. A detailed protocol has been outlined in the examples.

The emulsifying activity can be assessed by determination of the emulsifying activity index (EAI). The EAI is a measure of the amount of oil that can be emulsified per unit of protein. A detailed protocol based on a description by Pearce and Kinsella (J. Agric. Food Chem. 26 (3), 1978, 716-723) has been described in the examples.

In a preferred embodiment, the microparticulated patatin is characterized by a z-average diameter of between 10 and 1500 nm when suspended in water at room temperature, more preferably by a z-average diameter of between 20 and 1250 nm.

In a further preferred embodiment, the microparticulated patatin is characterized in that the patatin is partially denatured. Partial denaturation is apparent from the maintenance of some characteristics associated with native protein (such as gelling, foaming and emulsifying capacity, as well as solubility), but loss of other characteristics associated with native protein (such as lipase activity).

In yet a further embodiment, the microparticulated patatin is characterized in that the lipase activity is lower than 30 U/g product, preferably lower than 20 u/g product, more preferably lower than 10 U/g product, most preferably around 0 U/g product..

In a more preferred embodiment, the microparticulated patatin is characterized by a z-average diameter of between 20 and 1250 nm when suspended in water at room temperature, and further in that the lipase activity is lower than 30 U/g product.

The invention also relates to microparticulated protein comprising between 30 and 100 wt.% of protein relative to dry mass, the protein comprising at least 60 wt.% patatin, relative to all protein, which microparticulated patatin is

characterized by a z-average diameter of between 10 and 1500 nm when suspended in water at room temperature.

In a further embodiment, the invention also relates to microparticulated patatin comprising between 30 and 100 wt.% of protein relative to dry mass, the protein comprising at least 60 wt.% patatin, which microparticulated patatin is characterized in that the patatin is partially denatured.

In yet a further embodiment, the invention also relates to microparticulated patatin comprising between 30 and 100 wt.% of protein relative to dry mass, the protein comprising at least 60 wt.% patatin, which microparticulated patatin is characterized in that the lipase activity is lower than 30 U/g product.

In a preferred embodiment, the invention relates to microparticulated patatin comprising between 30 and 100 wt.% of protein relative to dry mass, the protein comprising at least 60 wt.% patatin, which microparticulated patatin is characterized by a z-average diameter of between 10 and 1500 nm when suspended in water at room temperature, and which microparticulated patatin is further characterized in that the patatin is partially denatured and that the lipase activity is lower than 30 U/g product.

In a more preferred embodiment, the invention relates to microparticulated patatin comprising between 30 and 100 wt.% of protein relative to dry mass, the protein comprising at least 60 wt.% patatin, which microparticulated patatin is characterized by a z-average diameter of between 20 and 1250 nm when suspended in water at room temperature, and which microparticulated patatin is further characterized in that the patatin is partially denatured and that the lipase activity is lower than 30 U/g product.

In a preferred embodiment of the invention, the microparticulated patatin is a powder comprising between 0 and 15 wt.% moisture, more preferably between 0.5 and 12 wt.% moisture.

In a further preferred embodiment of the invention, the microparticulated patatin comprises between 50 and 98 wt.% of protein relative to dry mass, more preferably between 60 and 95 wt.% of protein relative to dry mass.

In a further preferred embodiment of the invention, the microparticulated patatin is characterized by a z-average diameter of between 15 and 1250 nm when suspended in water at room temperature, more preferably between 20 and 1000 nm when suspended in water at room temperature.

Food products comprising microparticulated patatin

The invention also pertains to a method for preparing a food product comprising:
comprising:

    a) providing microparticulated patatin as described above;
    b) providing further ingredients;
    c) preparing a food product by combining the microparticulated patatin from a) and one or more further ingredients from b).

Preparing the food product preferably further comprises one or more steps generally known in the art of food preparation, as appropriate for the type of food product in question. Thus, in preferred embodiments, preparing the food product comprises one or more steps of mixing (such as stirring, kneading or homogenizing), heating (such as baking, frying, boiling, bain marie or sterilization), cooling (such as freezing, fermenting or ripening) and deforming (such as cutting, rasping, flattening, shaping or molding).

The food product according to the invention can be any product which is suitable for human consumption. The food product preferably is a food product selected from the group comprising: confectionery product, dessert, jam, jelly, food gel, condiment, sauce, sausage, emulsified meat product, an extruded bar, a sports bar, a baked bar, a plant-based meat analogue, a plant-based dairy analogue, a ready to eat meal, a dehydrated food, a shelf-stable food, a frozen food, a fermented food, a yogurt, a non-dairy vegan food, bread, a baked product, a pet food or an alcoholic fermented liquid.

The method for preparing a food product according to the invention can be any suitable method that forms a food product including microparticulated patatin. The method can include combining microparticulated patatin and other edible components to form the food product.

For example, the combining of microparticulated patatin and the other edible components can include dispersion of the components in water, heating of the dispersion of the components in water, for instance to create a gel, cooking, frying, dispersing air into the dispersion in order to create a foam, homogenizing, for instance to create an emulsion, baking, shaping, drying, extruding, fermenting, irradiating, mixing, smoking, or a combination thereof.

The method for preparing a food product according to the invention optionally comprises the addition of further ingredients to microparticulated patatin. Preferably the further ingredients are selected from the group of sugar, sweetener, salt, enzyme, mineral, food acid, food base, flour, starch, protein, polysaccharide, fat, oil, emulsifier, herb, spice, aroma, flavour, food colorant, vegetable, fruit, meat, fish, crustacean, rice, potato, milk, dairy product and combinations thereof.

In preferred embodiments, the micropparticulated patatin is used in food products as a functional additive, similar to use of native patatin. Preferably, microparticulated patatin is used in a food product for its gelling, foaming or emulsifying capacities. The advantage of such use is that microparticulated patatin does not possess hydrolytic activity, and thus does not cause off-flavors, or otherwise causes altered taste of the food product.

Food gels

In a preferred embodiment of the invention, the method for preparing a food product comprises:

c1) providing an aqueous suspension from the microparticulated patatin from a) and optionally one or more further ingredients, said aqueous suspension preferably comprising at least 1.5 wt.% of microparticulated patatin, more preferably between 2.0 and 30 wt.% of microparticulated patatin;

c2) preparing a gel from said aqueous suspension under c1 by one or more of the treatments selected from the group of heating, salt addition and acidification

Food products such as jams, jellies, confectionery products, desserts, quick-set gels and products prepared from fruit and vegetables often come in the form of gels. A food gel generally can be considered as a high moisture three-dimensional network that resists flow and retains its distinct structural shape (mechanical rigidity) when put under pressure.

The food gel of the invention is a three-dimensional network formed from microparticulated patatin dispersed in a continuous liquid phase.

The food gel of the invention can be formed by one or more treatments selected from the group of heating, adding salt, adding enzyme and acidification.

Heating is performed of an aqueous suspension of the microparticulated patatin, having a concentration of microparticulated patatin of at least 1.5 wt.%. The aqueous suspension is heated to a temperature above the denaturation temperature of the patatin. Preferably, the temperature to which the aqueous suspension is heated is at least 65 °C, more preferably at least 70 °C, even more preferably at least 75 °C. Upon cooling of the aqueous suspension, gelation can take place.

Generally, cooling is performed to a temperature below the gelation temperature. Preferably, the temperature to which the aqueous suspension is cooled is lower than 60 °C, more preferably lower than 57 °C, even more preferably lower than 54 °C. Preferably, the gel contains at least 80 wt.% water, more preferably at least 90 wt.% water.

Gelation can also be induced by addition of salts such as sodium chloride and calcium chloride. Salt addition can also be combined with heating, enzyme addition and/or acidification in order to induce gelation. Preferably, salt is added to a concentration of salt in the gel of at least 1 mM, more preferably between 3 mM and 400 mM, even more preferably between 5 and 300 mM.

Enzymatic activity can lead to gelation as well. Preferably, the enzymes added are selected from the group of protein degrading enzymes and protein crosslinking enzymes. Protein degrading enzymes are also called proteases. Examples are digestive enzymes such as trypsin, chymotrypsin, pepsin. Example of a protein crosslinking enzyme is transglutaminase [EC2.3.2.13]. More preferably, a protein crosslinking enzyme is added in the method according to the invention. Enzyme addition can also be combined with heating, salt addition and/or acidification in order to induce gelation.

Another well-known method to induce gelation is acidification. Preferably, the acids added in the method according to the invention are selected from the group of hydrogen chloride, citric acid, lactic acid, glucono-6-lacton, acetic acid, tartaric acid, malic acid, folic acid, fumaric acid. More preferably, the acid added in the method according to the invention is glucono-δ-lacton. The addition of acid can lead to a decrease of the pH of the gel. Preferably, acid is added such that the pH of the gel is lower than 5.8, more preferably the pH of the gel is between 3.0 and 5.5, even more preferably between 3.8 and 5.2. Acidification can also be combined with heating, salt addition and/or enzyme addition in order to induce gelation.

Food emulsions

In a further preferred embodiment of the invention, the method for preparing a food product comprises:

c3) providing a mixture comprising the microparticulated patatin from a), one or more lipids, water and optionally one or more further ingredients;
c4) emulsifying the mixture under c3 to obtain an emulsion, preferably an oil-in-water emulsion.

An emulsion is a mixture of two or more liquids that are normally immiscible owing to liquid-liquid phase separation. In an emulsion, one liquid (the dispersed phase) is dispersed in the other (the continuous phase). The microparticulated patatin is found to be able to stabilize emulsions. Without wishing to be bound by theory, it is hypothesized that the microparticulated patatin can migrate to the interface between the dispersed phase and the continuous phase, and reduce the interfacial tension of the interface therewith stabilizing the emulsion.

Two liquids can form different types of emulsions. As an example, oil and water can form, an oil-in-water emulsion, in which the oil is the dispersed phase, and water is the continuous phase. Oil and water can also form a water-in-oil emulsion, in which water is the dispersed phase and oil is the continuous phase. Multiple emulsions are also possible, including a "water-in-oil-in-water" emulsion and an "oil-in-water-in-oil" emulsion. Examples of oil-in-water or water-in-oil emulsions include vinaigrettes, homogenized milk, sauces, ice cream, sausages and other emulsified meat products. Emulsions, being liquids, do not exhibit a static internal structure. The dispersed phase normally forms droplets in the continuous phase, The droplets are usually assumed to be roughly spherical droplets. Typically, the droplet size of the dispersed phase is between 0.1 and 50 $\mu$m, preferably between 0.2 and 20 $\mu$m. The droplet size can normally be measured with laser diffraction.

Lipids, in the present context, can be any food grade lipid. Lipids can be liquid or solid, i.e. can encompass oils and fats. The lipid may be a plant oil or a microbial oil, or it can be animal-derived, such as lard or butter. Preferably, the lipid is a plant oil, such as a fruit oil, seed oil or nut oil. Well known examples of plant oils include olive oil, sunflower oil, sesame oil, coconut oil (or fat), castor oil, and rapeseed oil, but other plant oils are equally usable in the present context. Preferred are plant oils which have a relatively high proportion of short-chain fatty acids, coconut oil and palm kernel oil. Coconut oil is preferred.

Food foams

In a further preferred embodiment of the invention, the method for preparing a food product comprises:

c5) providing an aqueous suspension of the microparticulated patatin from a) and optionally one or more further ingredients;
c6) dispersing gas into the aqueous suspension of c5 so as to obtain a foamed food product;

Foamed food products generally are products in which air is incorporated. Foams consist of two phases, an aqueous phase and a gaseous (air) phase. Marshmallows, bread, ice cream, the white foam layer on top of a beer, meringues, whipped cream, and chocolate mousse are examples of foamed food products. Surfactants, such as lecithin, monoglycerides or proteins, can help to reduce the interfacial tension between the aqueous phase and the gaseous phase, therewith stabilizing the foamed food products.

In most of these products, proteins are the main surface active agents that help in the formation and stabilization of the dispersed gas phase. To create a protein-stabilized foam, it usually involves bubbling, whipping or shaking a protein solution and its foaming properties refers to its capacity to form a thin tenacious film at the gas-liquid interface for large amounts of gas bubbles to become incorporated and stabilized.

The foamability can be determined by measuring the overrun (Phillips and others 1987). The overrun (%) is defined as (weight 100 ml solution - weight 100 ml foam)* 100/(weight 100 ml foam).

Clarification of alcoholic fermented liquids

In a further preferred embodiment of the invention, the method for preparing a food product comprises:

c7) providing the microparticulated patatin under a) and a turbid alcoholic fermented liquid comprising undissolved material, said alcoholic fermented liquid having an alcohol content of 3 - 20 vol.%, preferably 5-15 vol.%, and said alcoholic product preferably being wine; and
c8) combining the microparticulated patatin with the alcoholic fermented liquid so as to form aggregate particles comprising at least part of the undissolved material and the microparticulated patatin; and
c9) separating the aggregate particles so as to obtain a clarified alcoholic fermented liquid.

Fining agents are applied in clarification of alcoholic fermented liquids, alcoholic fermented liquids include beer, wine, sake, mede, and other products obtained from fermentation of a natural product without subsequent distillation. Such products are generally known in the art. A preferred alcoholic fermented liquid in the present context is wine, preferably red wine.

Clarification enhances the stability of the fermented alcoholic product, removes off-flavors, and may soften sensory properties such as bitterness and astringency by modulating phenolic composition (such as in red wines).

Traditional fining agents based on proteins of animal origin, including casein, egg albumin, gelatin, and isinglass, are commonly used to remove protein-reactive phenolic compounds. However, color losses and unpleasant aromas can sometimes occur after the fining treatment with these proteins of animal origin. Moreover, animal proteins have allergenic or intolerant potential and their residual presence in the wine may pose an important risk in sensitive individuals. So not only because of the trend towards vegetarian and vegan products, but also from the health point of view, alternatives are being sought for these animal-derived fining agents. Microparticulated patatin can be advantageously used for fining of fermented alcoholic products.

Said fining comprises providing a turbid alcoholic fermented liquid comprising undissolved material as defined above, which product is preferably beer or wine, most preferably wine.

The microparticulated patatin is combined with, for example added to, the alcoholic fermented liquid. This provides aggregate particles comprising at least part of the undissolved material and the microparticulated patatin. Preferably, all of the undissolved material becomes part of the aggregate particles. The aggregate particles are subsequently separated from the alcoholic fermented liquid. Separation is preferably achieved through filtration; suitable types of filtration of alcoholic fermented liquids are commonly known in the art. The separating of the aggregate particles from the alcoholic fermented liquid provides a clarified alcoholic fermented liquid. "Clarified", in this regard, is to be interpreted as clear. An alternative wording is transparent. Clarified is thus intended to convey that light passes through the liquid without diffusion by particulate matter, even if the liquid itself may possess a color, such as for example red.

Methods for preparing a food product preferably comprise methods to obtain a food emulsion, a food foam or a food gel. In one preferred embodiment, the method is directed to obtaining a food foam. In another preferred embodiment, the method is directed at obtaining a food gel. In a further preferred embodiment, the method is directed at obtaining a food emulsion.

The invention further relates to a food product obtainable by the method according to the invention, in particular a food foam, a food emulsion, or a food gel.

The invention further relates to a food product prepared from microparticulated patatin according to the invention.

In a preferred embodiment of the invention, the food product is prepared from between 0.1 and 30 wt.% of dry mass of microparticulated patatin according to the invention, preferably between 0.2 and 25 wt.% of dry mass of microparticulated patatin according to the invention.

In a further preferred embodiment, the food product comprises a gelled product, the gelled product comprising between 25 and 98.5 wt.% of water and prepared from between 1.5 and 30 wt.% of dry mass of microparticulated patatin according to the invention.

In a further preferred embodiment, the food product comprises an emulsion, the emulsion comprising between 0.5 and 70 wt.% of emulsified lipid droplets and prepared from between 0.3 and 30 wt.% of dry mass of microparticulated patatin according to the invention.

In a further preferred embodiment, the food product comprises a foamed product, the foamed product prepared from between 0.2 and 30 wt.% of dry mass of microparticulated patatin according to the invention and having an overrun of between 0.5 and 30.

For the purpose of clarity and a concise description features are described herein as part of the same or separate embodiments, however, it will be appreciated that the scope of the invention may include embodiments having combinations of all or some of the features described.

The invention will now be illustrated by the following, non-limiting examples.

EXAMPLES

**Measuring protocols**

In the examples, the following measuring protocols were applied.

Particle size determination using direct light scattering

The particle size of the redissolved, spray-dried product was determined using a Zetasizer Nano ZS performing dynamic light scattering measurements. Measurements were performed at a fixed angle of 173° and a wavelength of 632.8 nm using a refractive index of 1.45. The determined z-average is a measure for the mean hydrodynamic size of the particles.

pH-stat method for measuring lipid acyl hydrolase (lipase) activity

Materials:
NaCl (1064045000 Merck), $KH_2PO_4$ (1051041000 Merck), Gum Arabic (Sigma, Cat. No. 69752), tributyrin (Acros Organics, A0445171).

The following assay has been adapted from the Food Chemicals Codex (Food Chemicals Codex, Volume 1, Codex, Institute of Medicine (USA) Committee on Food Chemicals, National Academies Press, 1996, pp. 803-807) with mild modifications:

A substrate emulsion was prepared from tributyrin and emulsifying reagent.

Emulsifying reagent:

8.95 g NaCl
0.20 g KHz PO$_4$
200 ml demineralized water
3.0 g Gum Arabic
270 ml glycerol

3.0 g Gum Arabic was added to 270 ml glycerol and stirred until dissolved. The NaCl, KH$_2$PO$_4$, and water were added to the solution, after which the solution was further diluted to 500 ml using demi-water.

Substrate emulsion:

8.0 g substrate
25 ml emulsifying reagent
118 ml demineralized water

The abovementioned chemicals were placed in a blender and blended for 5 minutes on maximal speed to create a substrate emulsion in water. A pH in the range 6-7 was observed for the substrate emulsion. This pH was adjusted to 7.0 prior to each reaction to minimize the non-linear reaction time.

pH-stat measurements were carried out under ambient conditions on a Tiamo titration system freshly prepared titrant (10.0 mM NaOH). Each run consisted of 30 ml of substrate emulsion. protein to be tested was introduced as a suspension with 5 wt.% dry matter. Typically, 50 mg of protein (1 ml of 5 wt.% solution) were required to achieve a linear curve. The pH stat was set to keep the pH at 7.0. The alkaline consumption to maintain this pH was recorded over time. The lipase activity is the derivative of the alkaline consumption against time, with one unit of activity defined as the amount of enzyme required to release 1 micromole of fatty acid per minute under the assay conditions. Typically, Solanic® 200 displays lipase activities between 300 and 2000 U/g product.

The results were obtained in absolute value in U/g product (examples 1 and 2), or expressed as percentage against a reference determination of the same batch of protein without being microparticulated (example 3; "Reduction of lipid acyl hydrolase activity [%]").

Method for measuring gelling behaviour and gel strength

The gelling behaviour and gel strength of protein compositions was determined using the gelation test protocol;

(a) A sample of protein composition is added to a 0.5 wt.% NaCl solution in an amount of 6 wt.%, based on the total weight of all ingredients;
(b) The protein sample obtained in step (a) is hydrated for 15 minutes at room temperature under continuous stirring;
(c) 18 ml of the sample obtained in step (b) is put into the coaxial cylinder cup (CC27, gap width 1.128 mm) of a rheometer (Anton Paar GmbH, MCR302);
(d) After lowering the bob (ST24-2D/2V/2V-30) into the cup, the top surface of the liquid is covered with paraffin oil to prevent sample dehydration during heating;
(e) After 5 min rest at 10 °C, the gelling behavior is determined by heating the sample from 10 °C to 90 °C at a rate of 2 °C/min, followed by a holding time of 20 minutes at 90 °C and a cooling step from 90 °C to 10 °C at a rate of 2 °C/min and by measuring, during the complete cycle, visco-elastic properties at constant strain (1%) and frequency (1 rad/s);
(f) After cooling, the visco-elastic properties are measured at constant strain (1%) and frequency (1 rad/s) at 10 °C for 15 minutes, and the average value of G' (storage modulus, Pa) at 10-15 minutes of measurement was taken as the gel strength.

Method for measuring foam overrun

The foaming properties can be determined by analysis of the foam overrun. Foam overrun of protein compositions was determined using the following protocol:

(a) A sample of protein composition is added to a 0.2 wt.% NaCl solution in an amount of 3 wt.%, based on the total weight of all ingredients;

(b) The protein sample obtained in step (a) is hydrated for 15 minutes at room temperature under continuous stirring;

(c) The pH of the protein sample obtained in step (b) is adjusted to 7;

(d) the weight of a certain volume X of protein sample obtained in step (c) is assessed;

(e) The protein sample obtained in step (c) is beaten in a stand mixer (Hobart Corporation, N50 5-Quart stand mixer) during 3 min at highest speed;

(f) The weight of the same volume X of foamed protein sample obtained in step (e) is determined within 1 min after beating;

(g) The foam overrun is then calculated based on the weight of the solution and the weight of the foam with the following formula;

$$Foam\ overrun\ (\%) = \frac{X_{protein\ solution}(g) - X_{foam}(g)}{X_{foam}(g)} * 100\%$$

Method for determination of emulsifying activity index

The emulsifying activity index (EAI) is a measure of the amount of oil that can be emulsified per unit of protein. EAI was determined as described by Pearce and Kinsella (J. Agric. Food Chem. 26 (3), 1978, 716-723) using the following protocol;

(a) A 0.1% sodium dodecyl sulfate (SDS, Sigma, USA (Cat.no.: 75746)) solution is produced;

(b) A sample of protein composition is added to a 1.0 wt.% NaCl solution in an amount of 2.0 wt.% dry matter;

(c) The protein composition obtained in step (b) is hydrated for 15 minutes at room temperature under continuous stirring;

(d) The pH of the protein composition obtained in step (c) is adjusted to 7;

(e) the protein composition obtained in step (d) is added to sunflower oil in a weight ratio of 1:2 of protein composition and sunflower oil;

(f) The mixture obtained in step (e) is homogenized for 30 s at 8000 rpm using a high shear mixer (Silverson L4R) to prepare a homogeneous emulsion;

(g) Of the emulsion obtained in step (f), 0.10 g is weighed into a beaker and diluted with a 0.1 wt.% SDS solution made in step (a) until a 500x dilution of the emulsion is obtained;

(h) Of the diluted emulsion obtained in step (g), 2.5 ml is put into a polystyrene cuvette of 10 x 10 x 45 mm;

(i) Immediately after filing the cuvette, the absorbance of the mixture obtained in step (h) is determined at 500 nm using a spectrophotometer (Hach-Lange Type DR 3600);

(j) The absorbance of a cuvette with 0.1 wt.% SDS solution is measured as a reference;

(k) The emulsion activity index is calculated from;

$$EAI\ \left(\frac{m^2}{g}\right) = \frac{2 * 2.303 * A_0 * DF}{C * \theta * 10000}$$

In which;

- $A_0$ = absorbance of the diluted emulsion at t = 0 min (corrected for the measured reference);
- DF = Dilution factor;
- C = emulsifier concentration;
- $\theta$ = the fraction of oil used to form the emulsion;

**Materials**

The following materials were used.

- Total native potato protein (TPP), prepared by ultrafiltration and diafiltration against a salt solution of potato fruit juice (as described in WO 2020/242302A1), yielding a product with 88 - 92 wt.% of true protein on dry matter and between 40 and 50 wt.% of patatin relative to the total amount of protein.
- Solanic® 200 (ex Avebe U.A.), a product with more than 90 wt.% of true protein on dry matter and 80 to 90 wt.% of native patatin relative to the total amount of protein.

**Example 1: Microparticulation**

The 8 wt.% dispersions of both TPP and Solanic® 200 were prepared by hydrating the powder in water for 15 min at room temperature and under continuous stirring. The pH of the dispersions was adjusted to pH 9. No further pretreatment was performed. 15 l of protein dispersion/solution was subjected to microparticulation using a mixer (Karl Schnell, Mixer 30). Microparticulation was carried out by heating the protein dispersion/solution for 15 min at 88°C and subsequently cooling the solutions to a temperature of 50°C whilst applying a shear of 3.2 s⁻¹. Heating, holding at high temperature and cooling were performed at a reduced pressure of 0,25 bar. After cooling to 50°C, the solutions were homogenized in two steps at a pressure of 150 and 50 bar.

The 10 wt.% dispersion of Solanic® 200 was prepared by hydrating the powder in water for 15 min at room temperature under continuous stirring. The pH of the dispersion was adjusted to pH 6.9. No further pretreatment was performed. 30 ml of the patatin dispersion is put into into the coaxial cylinder cup (CC27, gap width 1.128 mm) of a rheometer (Anton Paar GmbH, MCR302). After lowering the bob (ST24-2D/2V/2V-30) into the cup (CC27), the top surface of the liquid is covered with the associated lid to prevent sample dehydration during heating. The patatin dispersions were heated to 75°C with a heat holding time of 10 min. Heating from starting temperature (20°C) to processing temperature (75°C) took 15 min, and cooling from processing temperature to final temperature (20°C) took 20 min. Shear was kept constant during heating, holding and cooling at 14.4 s⁻¹.

The results are presented in Table 1.

Table 1; Characteristics of Solanic® 200 after microparticulation

| Product | Treatment | Diameter [nm] | Lipid acyl hydrolase activity [U/g DM] | Storage modulus [Pa] | EAI [m²/g] | Foam overrun [%] |
|---|---|---|---|---|---|---|
| Ref TPP - untreated, 8 wt.%, pH 9 | no | n.d. | n.d. | 1079 | 10.9 | 1579 |
| Ref TPP, 8 wt.%, pH 9 | 15 min 88°C, 3.2 s⁻¹ | 23●10³ | 0 | 394 | 14.3 | 215 |
| Solanic® 200 - untreated, 10 wt.%, pH 6.9 | no | n.d. | n.d. | 5644 | n.d. | n.d. |
| Solanic® 200, 10 wt.%, pH 6.9 | 10 min 75°C, 14.4 s⁻¹ | 3811 | 0 | 541 | n.d. | n.d. |
| Solanic® 200 - untreated, 8 wt.%, pH 9 | no | n.d. | 505 | 5644 | 16.6 | 1688 |
| Solanic® 200, 8 wt.%, pH 9 | 15 min 88°C, 3.2 s⁻¹ | 1293 | 0 | 4580 | 17.2 | 1616 |

Whereas the lipid acyl hydrolase activity of both TPP and Solanic® 200 was reduced to zero after microparticulation, only Solanic® 200, 8 wt.%, pH 9 has largely kept its gelation, emulsification and foaming activity after microparticulation. TPP lost large part of its gelation and foaming activity and Solanic® 200, 10 wt.%, pH 6.9 lost large part of its gelation activity. It is presumed that retaining the functional activities is caused by the relatively small particle size of Solanic® 200, 8 wt.%, pH 9 after microparticulation of 1293 nm, compared to 23.10³ nm for TPP and 3811 nm for Solanic® 200, 10 wt.%, pH 6.9.

**Example 2: Spray drying of microparticulated patatin**

Patatin concentrate was taken from Solanic® 200 production (April 2023) prior to drying into a powder and stored cool until further use (within 24 hours). Prior to further processing, the patatin concentrate was diluted to 6 wt.%. The pH was adjusted to 9. The Solanic® 200 was heated in a scraped surface heat exchanger (Armfield Limited FT174X) by pre-heating to 30 °C while applying a shear of 9.6 s⁻¹. After pre-heating the product was heated to 85 °C and held at this temperature for 1.8 minutes under a constant shear of 14.4 s⁻¹. After heating, the product was homogenized in a homogenizer (GEA Mechanical Equipment, Lab Homogenizer Twin PANDA 400) in two steps at 150/50 bar and cooled under constant shear of 14.4 s⁻¹ to 15 °C. The microparticulated patatin was spray dried using a spray drier (Sanco Processing BV) with an inlet temperature of 160°C and outlet temperature of 50°C. The resulting powder was reconstituted by mixing the powder with water at a concentration of 6 wt.% dry matter.

Table 2; Drying of microparticulated Solanic® 200

| Product | Treatment | Diameter [nm] | Lipid acyl hydrolase activity [U/g DM] | Storage modulus [Pa] |
|---|---|---|---|---|
| Solanic® 200, 6 wt.%, pH 9 | 1.8 min 85°C, 14.4 s$^{-1}$ | n.d. | 0 | 1294 |
| Solanic® 200 - powder, 6 wt.%, pH 9 | 1.8 min 85°C, 14.4 s$^{-1}$; spray dried | 119 | 0 | 1021 |

After spray drying and reconstitution, the microparticulated Solanic® 200 retained its gelling properties.

**Example 3: Effect of heating conditions**

Patatin concentrate was taken from Solanic® 200 production (April 2023) prior to drying into a powder and stored cool until further use (within 24 hours). Prior to further processing, the patatin concentrate was diluted to 5 or 6 wt.%. The pH was adjusted to 9. The Solanic® 200 was pre-heated to 30°C while applying a shear of 9.6 s$^{-1}$. After pre-heating the product was heated at conditions indicated in Table 3 under a constant shear of 14.4 s$^{-1}$. After heating, the product was homogenized in a homogenizer (GEA Mechanical Equipment, Lab Homogenizer Twin PANDA 400) in two steps at 150/50 bar and cooled under constant shear of 14.4 s$^{-1}$ to 15 °C.

Table 3; Effect of heating conditions

| Product | Treatment | Diameter [nm] | Reduction of lipid acyl hydrolase activity [%] | Storage modulus [Pa] |
|---|---|---|---|---|
| Solanic® 200, 5 wt.%, pH 9 | 15 min 60°C, 14.4 s$^{-1}$ | 52.8 | 74.8 | 4240 |
| Solanic® 200, 5 wt.%, pH 9.3 | 1.5 min 75°C, 14.4 s$^{-1}$ | 404 | 100 | 5582 |
| Solanic® 200, 5 wt.%, pH 9 | 3.6 min 80°C, 14.4 s$^{-1}$ | 54.7 | 100 | 4586 |
| Solanic® 200, 6 wt.%, pH 9 | 15 min 85°C, 14.4 s$^{-1}$ | 119 | 100 | 1021 |

Heating for 15 min at 60°C didn't fully inactivate the lipase activity of patatin. At the other heating conditions, the lipase activity was fully inactivated. The storage modulus was at least 1021 Pa and maximally 5582 Pa, indicating that the gelling properties were good. The z-average particle diameter was between 52.8 and 404 nm. As can be concluded from the table, a microparticulation treatment step at appropriate heating conditions can lead to deactivation of the lipid acyl hydrolase activity without substantially affecting the gelation properties of patatin.

**Claims**

1.    A method for the preparation of microparticulated patatin comprising:

a) Providing an aqueous suspension comprising at least 1 wt.% of protein concentrate, said protein concentrate comprising at least 80 wt.% of protein relative to dry matter, and said protein comprising at least 60 wt.% of patatin, relative to all protein;
b) Adjusting the pH of the aqueous suspension to a value of between 7.5 and 11, thereby obtaining a pH-adjusted protein suspension;
c) Heating the pH-adjusted protein suspension to a temperature of at least 75°C;
d) Holding the pH-adjusted protein suspension at a temperature of at least 75°C while applying shear at a shear rate of at least 2.0 s$^{-1}$, thereby obtaining a sheared protein suspension;
e) Cooling the sheared protein suspension to a temperature below 60°C while applying shear at a shear rate of at least 2.0 s$^{-1}$, thereby obtaining said microparticulated patatin.

2.    A method for the preparation of microparticulated patatin according to claim 1 in which the aqueous suspension comprises between 2.0 and 20 wt.% of protein concentrate, preferably between 3.0 and 15 wt.% of protein concentrate.

3. A method for the preparation of microparticulated patatin according to claim 1 or 2 in which the protein comprises between 70 and 99 wt.% of patatin, relative to all protein.

4. A method for the preparation of microparticulated patatin according to any of the preceding claims in which the pH of the aqueous suspension is adjusted to a value between 8.0 and 10.5.

5. A method for the preparation of microparticulated patatin according to any of the preceding claims in which the pH-adjusted protein suspension is heated to a temperature of between 76 and 98°C, preferably to a temperature of between 78 and 95°C.

6. A method for the preparation of microparticulated patatin according to any of the preceding claims in which the pH-adjusted protein suspension is held at a temperature of at least 75°C for a time of at least 10 s, preferably for a time between 20 s and 20 min, more preferably for a time between 40 s and 15 min.

7. A method for the preparation of microparticulated patatin according to any of the preceding claims in which, during holding the pH-adjusted protein suspension at a temperature of at least 75°C, a shear rate of between 5 and 1000 s$^{-1}$ is applied, preferably a shear rate between 8 and 500 s$^{-1}$.

8. A method for the preparation of microparticulated patatin according to any of the preceding claims comprising a further step of drying the microparticulated patatin, thereby providing microparticulated patatin in the form of a powder.

9. Microparticulated patatin obtainable by any of the preceding claims.

10. Microparticulated patatin according to claim 9, **characterized by** a z-average diameter of between 10 and 1500 nm when suspended in water at room temperature, and further **characterized in that** the patatin has lipase activity of lower than 30 U/g product.

11. Microparticulated patatin comprising between 30 and 100 wt.% of protein relative to dry mass, the protein comprising at least 60 wt.% patatin, relative to all protein, which microparticulated patatin is **characterized by** a z-average diameter of between 10 and 1500 nm when suspended in water at room temperature, and which microparticulated patatin is further **characterized in that** the patatin has lipase activity of lower than 30 U/g product, said microparticulated patatin preferably comprising between 50 and 98 wt.% of protein relative to dry mass, more preferably between 60 and 95 wt.% of protein relative to dry mass.

12. Microparticulated patatin according to any of claims 9-11 **characterized in that** the z-average diameter is between 15 and 1250 nm when suspended in water at room temperature, preferably between 20 and 1000 nm when suspended in water at room temperature.

13. A method for preparing a food product comprising:

    b) providing microparticulated patatin according to any of claims 9-12;
    b) providing further ingredients;
    c) preparing a food product by combining the microparticulated patatin from a) and one or more further ingredients from b), wherein said preparing preferably further comprises one or more steps of mixing (such as stirring, kneading or homogenizing), heating (such as baking, frying, boiling, bain marie or sterilization), cooling (such as freezing or ripening) and deforming (such as cutting, rasping, flattening, shaping or molding).

14. A method according to claim 13, wherein said preparing comprises a step of

    c1) providing an aqueous suspension from the microparticulated patatin from a) and optionally one or more further ingredients, said aqueous suspension preferably comprising at least 1.5 wt.% of microparticulated patatin, more preferably between 2.0 and 30 wt.% of microparticulated patatin;
    c2) preparing a gel from said aqueous suspension under c1 by one or more of the treatments selected from the group of heating, salt addition and acidification;

    and/or wherein said preparing comprises a step of

c3) providing a mixture comprising the microparticulated patatin from a), one or more lipids, water and optionally one or more further ingredients;

c4) emulsifying the mixture under c3 to obtain an emulsion, preferably an oil-in-water emulsion;

and/or wherein said preparing comprises a step of

c5) providing an aqueous suspension of the microparticulated patatin from a) and optionally one or more further ingredients;

c6) dispersing gas into the aqueous suspension of c5 so as to obtain a foamed food product;

or wherein said preparing comprises a step of

c7) providing the microparticulated patatin under a) and a turbid alcoholic fermented liquid comprising undissolved material, said alcoholic fermented liquid having an alcohol content of 3 - 20 vol.%, preferably 5 - 15 vol.%, and said alcoholic product preferably being wine; and

c8) combining the microparticulated patatin with the alcoholic fermented liquid so as to form aggregate particles comprising at least part of the undissolved material and the microparticulated patatin; and

c9) separating the aggregate particles so as to obtain a clarified alcoholic fermented liquid.

15. A food product obtainable by the method according to claim 14 under c1 - c6.

16. A food product comprising or prepared from microparticulated patatin according to any of claims 9 - 13.

17. A food product according to claim 15 or 16 comprising or prepared from between 0.1 and 30 wt.% of dry mass of microparticulated patatin according to any of claims 9 - 13, preferably between 0.2 and 25 wt.% of dry mass of microparticulated patatin according to any of claims 9 - 13.

Europäisches
Patentamt

European
Patent Office

Office européen
des brevets

# EUROPEAN SEARCH REPORT

Application Number

EP 23 18 9847

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/244272 A1 (GIUSEPPIN MARCO LUIGI FEDERICO [NL] ET AL) 27 September 2012 (2012-09-27) * paragraph [0156] - paragraph [0165]; claims 1-23; examples 14-15 * | 1-17 | INV. A23J1/00 A23J1/16 A23J3/14 A23L2/52 A23L2/66 |
| X | WO 2008/069650 A1 (COOPERATIE AVEBE U A [NL]; GIUSEPPIN MARCO LUIGI FEDERICO [NL] ET AL.) 12 June 2008 (2008-06-12) * claims 1-25; example 10 * | 9,12-17 | A23L19/15 A23L33/17 A23L33/185 A23L35/00 C12G1/00 |
| X | US 2018/289036 A1 (BOHLSCHEID JEFFRI CURTIS [US] ET AL) 11 October 2018 (2018-10-11) * paragraph [0100] - paragraph [1117]; claims 1-39; examples 10,13,14 * | 9,12-17 | C12G3/00 |
| X | SCHMIDT JESPER MALLING ET AL: "Foam and emulsion properties of potato protein isolate and purified fractions", FOOD HYDROCOLLOIDS, ELSEVIER BV, NL, vol. 74, 7 August 2017 (2017-08-07), pages 367-378, XP085202090, ISSN: 0268-005X, DOI: 10.1016/J.FOODHYD.2017.07.032 * 2.1.Protein samples; page 368, left-hand column, paragraph 3 * | 9,12-17 | |

-/--

**TECHNICAL FIELDS SEARCHED (IPC)**

A23J
A23L
C12G

The present search report has been drawn up for all claims

| Place of search | Date of completion of the search | Examiner |
|---|---|---|
| Munich | 18 January 2024 | Shadid, Rania |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

## EUROPEAN SEARCH REPORT

**Application Number**

EP 23 18 9847

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHMIDT JESPER MALLING ET AL: "Gel properties of potato protein and the isolated fractions of patatins and protease inhibitors – Impact of drying method, protein concentration, pH and ionic strength", FOOD HYDROCOLLOIDS, ELSEVIER BV, NL, vol. 96, 14 May 2019 (2019-05-14), pages 246-258, XP085738252, ISSN: 0268-005X, DOI: 10.1016/J.FOODHYD.2019.05.022 [retrieved on 2019-05-14] * 2.1 Potato protein samples; page 247, right-hand column, paragraph 5 – page 248, left-hand column * | 9,12-17 | |
| A | CN 115 039 869 A (UNIV HARBIN COMMERCE) 13 September 2022 (2022-09-13) * claims 1-10 * | 1-17 | |
| A | WO 2020/242302 A1 (COOPERATIE AVEBE U A [NL]) 3 December 2020 (2020-12-03) * claims 1-30 * | 1-17 | TECHNICAL FIELDS SEARCHED (IPC) |

The present search report has been drawn up for all claims

| Place of search | Date of completion of the search | Examiner |
|---|---|---|
| Munich | 18 January 2024 | Shadid, Rania |

EPO FORM 1503 03.82 (P04C01)

## ANNEX TO THE EUROPEAN SEARCH REPORT
## ON EUROPEAN PATENT APPLICATION NO.

EP 23 18 9847

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2024

| Patent document cited in search report | | | Publication date | Patent family member(s) | | | Publication date |
|---|---|---|---|---|---|---|---|
| US 2012244272 | A1 | | 27-09-2012 | CA | 2778061 | A1 | 19-05-2011 |
| | | | | DK | 2498618 | T3 | 02-02-2015 |
| | | | | EP | 2498618 | A1 | 19-09-2012 |
| | | | | US | 2012244272 | A1 | 27-09-2012 |
| | | | | WO | 2011059330 | A1 | 19-05-2011 |
| WO 2008069650 | A1 | | 12-06-2008 | AT | E451842 | T1 | 15-01-2010 |
| | | | | CA | 2669090 | A1 | 12-06-2008 |
| | | | | CA | 2669096 | A1 | 12-06-2008 |
| | | | | DK | 1974615 | T3 | 26-04-2010 |
| | | | | DK | 2083634 | T3 | 18-04-2016 |
| | | | | EP | 1920662 | A1 | 14-05-2008 |
| | | | | EP | 1974615 | A1 | 01-10-2008 |
| | | | | EP | 2083634 | A1 | 05-08-2009 |
| | | | | PL | 1974615 | T3 | 31-05-2010 |
| | | | | PL | 2083634 | T3 | 29-07-2016 |
| | | | | PT | 1974615 | E | 22-03-2010 |
| | | | | US | 2010003394 | A1 | 07-01-2010 |
| | | | | US | 2010040591 | A1 | 18-02-2010 |
| | | | | US | 2013281669 | A1 | 24-10-2013 |
| | | | | US | 2015257416 | A1 | 17-09-2015 |
| | | | | WO | 2008069650 | A1 | 12-06-2008 |
| US 2018289036 | A1 | | 11-10-2018 | AR | 113218 | A1 | 19-02-2020 |
| | | | | AU | 2018243407 | A1 | 10-10-2019 |
| | | | | CA | 3055986 | A1 | 04-10-2018 |
| | | | | EP | 3599881 | A1 | 05-02-2020 |
| | | | | TW | 201841572 | A | 01-12-2018 |
| | | | | US | 2018289036 | A1 | 11-10-2018 |
| | | | | WO | 2018183770 | A1 | 04-10-2018 |
| CN 115039869 | A | | 13-09-2022 | NONE | | | |
| WO 2020242302 | A1 | | 03-12-2020 | AU | 2020283316 | A1 | 02-12-2021 |
| | | | | BR | 112021023582 | A2 | 04-01-2022 |
| | | | | CA | 3139407 | A1 | 03-12-2020 |
| | | | | CN | 114072004 | A | 18-02-2022 |
| | | | | DK | 3840581 | T3 | 06-02-2023 |
| | | | | EA | 202192697 | A1 | 15-03-2022 |
| | | | | EP | 3840581 | A1 | 30-06-2021 |
| | | | | EP | 4154726 | A1 | 29-03-2023 |
| | | | | EP | 4176729 | A1 | 10-05-2023 |
| | | | | FI | 3840581 | T3 | 31-01-2023 |
| | | | | HR | P20230074 | T1 | 31-03-2023 |
| | | | | JP | 7305802 | B2 | 10-07-2023 |
| | | | | JP | 2022534061 | A | 27-07-2022 |

EPO FORM P0459

For more details about this annex : see Official Journal of the European Patent Office, No. 12/82

**ANNEX TO THE EUROPEAN SEARCH REPORT**
**ON EUROPEAN PATENT APPLICATION NO.**                EP 23 18 9847

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2024

| Patent document cited in search report | Publication date | Patent family member(s) | | Publication date |
|---|---|---|---|---|
| | | JP | 2023126274 A | 07-09-2023 |
| | | PL | 3840581 T3 | 27-02-2023 |
| | | US | 2022240538 A1 | 04-08-2022 |
| | | WO | 2020242302 A1 | 03-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2008069650 A

- WO 2020242302 A1

### Non-patent literature cited in the description

- **KONINGSVELD G.A.** Physicochemical and functional properties of potato proteins. PhD thesis Wageningen University, 2001, 65-66

- Food Chemicals Codex. Institute of Medicine (USA) Committee on Food Chemicals, National Academies Press, 1996, vol. 1, 803-807
- **PEARCE** ; **KINSELLA**. *J. Agric. Food Chem.*, 1978, vol. 26 (3), 716-723